# EUROPÄISCHE PATENTSCHRIFT

(11) **EP 2 039 275 B1**
(45) Veröffentlichungstag und Bekanntmachung des Hinweises auf die Patenterteilung: **03.08.2011**
(21) Anmeldenummer: 08014747.3
(22) Anmeldetag: 20.08.2008
(51) Int. Cl.: A47J 39/00

(54) **Temperierungsschrank für Speisen**
Tempering box for food
Armoire pour tempérer des plats préparés

(30) Priorität: 19.09.2007 DE 102007045610
(43) Veröffentlichungstag der Anmeldung: 25.03.2009
(73) Patentinhaber: Rieber GmbH & Co. KG, 72770 Reutlingen (DE)
(72) Erfinder: Maier, Max, 71636 Ludwigsburg (DE)
(74) Vertreter: Menges, Rolf

(56) Entgegenhaltungen:
- EP-A- 0 094 783
- EP-A- 0 143 066
- EP-A- 0 529 989
- EP-A- 0 990 405
- EP-A- 1 260 155
- WO-A-03/043476
- DE-A1- 2 228 784
- DE-A1- 2 929 666
- DE-C- 650 281
- DE-U1- 20 316 141
- DE-U1-202005 012 767

## Beschreibung

Die Erfindung betrifft einen Temperierungsschrank für Speisen mit einem verschließbaren Innenraum zum Aufnehmen mehrerer, übereinander angeordneter Speisenbehälter.

Benannt sind Temperierungsschränke für Speisen im Gastronomie- und Gemeinschaftsverpflegungsbereich in Form von rollbaren Schränken, in die sogenannte Gastronorm-Behälter mit vorbereiteten Speisen übereinander eingeschoben werden können. Die Schränke weisen einen verschließbaren Innenraum auf und sind zum Transport und zur Pufferung von Speisen vorgesehen. Bekannte rollbare Temperierungsschränke sind in ihren Seitenwandungen mit Heizeinrichtungen oder auch Kühleinrichtungen versehen und müssen vorgeheizt bzw. vorgekühlt werden, bevor warme bzw. kalte Speisen in Gastronorm-Behältern eingeschoben werden. Beispielsweise werden Speisen In einer zentralen Großküche vorbereitet, in Gastronorm-Behälter abgefüllt und in die vorgeheizten bzw. vorgekühlten Temperierungsschränke eingeschoben. Die Temperierungsschränke können dann zusammen mit den Speisen an einen Ort gebracht werden, an dem die Speisen verteilt werden sollen, beispielsweise auf einer Station eines Krankenhauses. Dort können die Heiz- bzw. Kühleinrichtungen wieder aktiviert werden, wenn ein Stromanschluss zur Verfügung steht. Die den Innenraum umgebenden Wände sind aber auch thermisch Isoliert, so dass eine gewisse Pufferungszeit möglich ist. Nachteilig an den bekannten Temperierungsschränken ist, dass diese lediglich zum Transport und zum Warmhalten oder Kühlhalten von Speisen geeignet sind. Selbst wenn das Fassungsvolumen eines Temperierungsschrankes für die komplette Speisenfolge, die auf einer Krankenhausstation ausgegeben werden soll, genügen sollte, so sind wenigstens zwei Temperierungsschränke erforderlich, einer für die Warmspeisen und einer für die Kaltspeisen. Darüber hinaus sind die bekannten Temperierungsschränke in Bezug auf den erforderlichen Energieaufwand vergleichsweise ineffizient und sie sind darüber hinaus wenig flexibel einzusetzen, nicht zuletzt deshalb, da ein Vorwärmen bzw. Vorkühlen vor dem Einbringen der Speisen erforderlich ist.

Aus der deutschen Patentschrift DE 650 281 C ist ein Temperierungsschrank für Speisen mit einem verschließbaren Innenraum bekannt, bei dem der Innenraum mittels einer durchgehenden Wand verschlossen ist. Die durchgehende Wand ist von einem Luftspalt umgeben und innerhalb einer äußeren Hülle angeordnet. Eine Oberseite der äußeren Hülle kann mittels eines Deckels geöffnet und verschlossen werden und in die äuβere Hülle kann oberhalb des Innenraums und im Abstand hiervon ein Behälter angeordnet werden, der wahlweise mit Speisen oder mit Kühlmittel gefüllt wird. Eine Heizeinrichtung ist zwischen der den Innenraum begrenzenden Wand und der Außenhülle im Bereich eines Bodens des Innenraums angeordnet.

In der europäischen Offenlegungsschrift EP 0 529 989 A1 ist ein Temperierungsschrank für Speisen mit einem verschließbaren Innenraum beschrieben, in dem mehrere übereinander angeordnete Speisenbehälter auf Tabletts angeordnet werden können. Der Innenraum ist mit zwei Öffnungen zum Einblasen von Warmluft versehen und kann in einen stationären Schrank eingeschoben werden, in dem ein Ventilator mit einer Heizeinrichtung angeordnet ist. Die in den Innenraum eingeschobenen Tabletts erlauben die Luftzirkulation im gesamten Innenraum und dienen als Ablenkbleche für erwärmte Luft, um diese auf die Speisen zu leiten.

Aus der europäischen Offenlegungsschrift EP 0 143 066 A1 ist ein Temperierungsschrank für Speisen mit einem verschließbaren Innenraum zum Aufnehmen mehrerer, übereinander angeordneter Speisenbehälter bekannt, bei dem zwei Ventilatoren vorgesehen sind, um Luft im Innenraum umzuwälzen und bei dem wenigstens einer der Ventilatoren mit einer Heizeinrichtung zum Beheizen des Innenraums versehen ist. Einer der Ventilatoren ist zusammen mit einer Heizeinrichtung im Bereich einer den Innenraum nach oben begrenzenden, durchgehenden Decke angeordnet Ein Kühlaggregat ist oberhalb der durchgehenden Decke auf dem Temperierungsschrank angeordnet Der Innenraum des Schranks ist durch fest eingebaute Zwischenebenen in mehrere Bereiche aufgeteilt, wobei an zwei Seiten der Zwischenebenen Schlitze mittels spezieller Elemente geöffnet und verschlossen werden können. Im geöffneten Zustand kann die Luft dadurch im gesamten Innenraum zirkulieren, im geschlossenen Zustand kann der Innenraum beispielsweise in einen beheizten Abschnitt und einen gekühlten Abschnitt aufgeteilt werden. Mit der Erfindung soll ein Temperierungsschrank für Speisen bereitgestellt werden, der flexibel einsetzbar und energieeffizient zu betreiben ist.

Erfindungsgemäß ist hierzu ein Temperierungsschrank für Speisen mit einem verschließbaren Innenraum zum Aufnehmen mehrerer, übereinander angeordneter Speisenbehälter und wenigstens zwei übereinander angeordneten Ventilatoren vorgesehen, um Luft in einem oberen Abschnitt beziehungsweise einem unteren Abschnitt des Innenraums umzuwälzen, wobei wenigstens der für den unteren Abschnitt vorgesehene Ventilator mit einer Heizeinrichtung zum Beheizen des Innenraums versehen ist, bei dem wenigstens eine Öffnung im Bereich einer den Innenraum nach oben begrenzenden Decke und ein erstes thermisches Energiespeicherelements, eine Heizeinrichtung oder eine Kühleinrichtung zum Einsetzen in die Öffnung vorgesehen sind, wobei ein horizontal in den Innenraum einschiebbares Trennelement aus schlecht wärmeleitfähigem Material vorgesehen ist, um den Innenraum in einen oberen und unteren Bereich aufzuteilen.

Indem in der Decke des Innenraums eine Öffnung zum Einsetzen eines ersten thermischen Energiespeicherelements, einer Heizeinrichtung oder einer Kühleinrichtung vorgesehen ist, ist der Temperierungsschrank in äußerst flexibler Weise einzusetzen. Beispielsweise ist eine passive Kühlung des Innenraums dadurch möglich, dass ein kaltes thermisches Energiespeicherelement in die Öffnung eingesetzt wird. Da ein solches Energiespeicherelement in eine Öffnung in der Decke des Innenraums eingesetzt wird, bildet das kalte Energiespeicherelement wenigstens abschnittsweise die Decke des Innenraums. Ohne Wärme- übergangsverluste kann dadurch die Luft im Innenraum abgekühlt werden, die dann vom Energiespeicherelement direkt nach unten absinkt. Dem Innenraum kann auf diese Weise sehr schnell und effizient Wärme entzogen werden, so dass ein Vorkühlen des Innenraums vor dem Einschieben kalter Speisen nicht mehr erforderlich ist. Alternativ kann in die Decke des Innenraums eine Heizeinrichtung eingesetzt werden, beispielsweise ein Heizregister zum Gratinieren. Der Temperierungsschrank wird dadurch zum Garen von Speisen verwendbar. Als weitere Alternative kann eine aktive Kühleinrichtung eingesetzt werden, die beispielsweise elektrisch betrieben wird und eine starke und im Wesentlichen zeitlich unbegrenzte Kühlung des Innenraums ermöglicht. Eine Heizeinrichtung zum Beheizen des Innenraums ist vorgesehen. Auf diese Weise kann der Temperierungsschrank in flexibler Weise eingesetzt werden.

Ein horizontal in den Innenraum einschiebbares Trennelement aus schlecht wärmeleitfähigem Material ist vorgesehen, um den Innenraum in einen oberen und unteren Bereich aufzuteilen.

Auf diese Weise wird eine flexible Aufteilung des Temperierungsschranks in einen oberen, beispielsweise kalten Bereich und einen unteren, beispielsweise warmen Bereich möglich. Die Seitenwände des Innenraums werden dabei vorzugsweise aus schlecht wärmeleitfähigem Material, insbesondere Chrom-/Nickelstahl gebildet, der leicht zu reinigen ist und beispielsweise auch mit eingeprägten Vorsprüngen versehen werden kann, um Führungsschienen für einzuschiebende Behälter zu bilden. Überraschenderweise hat sich herausgestellt, dass die Seitenwandungen des Innenraums aus einem durchgehenden Blechteil aus Chrom-Nickelstahl bestehen können, da das Einschieben eines Trennelements aus schlecht wärmeleitfähigem Material ausreicht, um einen Wärmeübergang aus dem unteren in den oberen Bereich oder umgekehrt weitgehend zu verhindern. Da das Trennelement in verschiedenen Höhen eingeschoben werden kann, ist der Temperierungsschrank äußerst flexibel einsetzbar, da beispielsweise Speisenfolgen mit unterschiedlichem Anteil an warmen und kalten Speisen aufgenommen werden können. Bevorzugt wird eine Aufteilung des Innenraums in einen unteren Abschnitt mit etwa 2/3 des Gesamtvolumens für warme Speisen und einen oberen Abschnitt mit etwa 1/3 des Gesamtvolumens für kalte Speisen vorgenommen.
Die Heizeinrichtung kann im Bereich eines des Innenraum nach unten begrenzenden Bodens vorgesehen sein.

Indem die Heizeinrichtung im Bereich des den Innenraum nach unten begrenzenden Bodens vorgesehen ist, kann Wärme in sehr energieeffizienter Weise in den Innenraum eingeleitet werden. Warme Luft steigt selbsttätig nach oben, so dass mittels der Heizeinrichtung eine sehr schnelle Erwärmung des Innenraums möglicht ist. Ein Vorheizen des Temperierungsschranks vor dem Einschieben warmer Speisen wird dadurch überflüssig. Darüber hinaus kann der Temperierungsschrank nicht nur zum Warmhalten, sondern auch zum Garen oder Fertiggaren verwendet werden, da Speisenbehälter mit zu garenden Speisen unmittelbar auf die Heizeinrichtung am Boden gestellt werden können. Dadurch ist eine sehr energieeffiziente unmittelbare Einleitung der Wärme in die Speisenbehälter möglich. Selbstverständlich ist aber auch ein Fertiggaren oder Niedertemperaturgaren im gesamten Innenraum möglich.

Bei einem erfindungsgemäßen Temperierungsschrank für Speisen mit einem verschließbaren Innenraum zum Aufnehmen mehrerer, übereinander angeordneter Speisenbehälter kann eine Heizeinrichtung im Bereich eines den Innenraum nach unten begrenzenden Bodens und ein den Innenraum wenigstens abschnittsweise nach oben begrenzendes erstes thermisches Energiespeicherelement vorgesehen sein, wobei eine den Innenraum wenigstens abschnittsweise nach oben begrenzende Wandung des Energiespeicherelements aus gut wärmeleitfähigem Material besteht.

Überraschenderweise hat sich gezeigt, dass das Vorsehen eines Energiespeicherelements mit einer Wandung aus gut wärmeleitfähigem Material in der Decke des Innenraums den flexiblen Einsatz des Temperierungsschranks verbessert. Üblicherweise wurden bei Temperierungsschränken den Innenraum begrenzende Wandungen aus schlecht wärmeleitfähigem Material vorgesehen, um die Speisen im Innenraum auch bei abgeschalteten Heiz- bzw. Kühleinrichtungen möglichst lange auf Temperatur zu halten. Beim Vorheizen bzw. Vorkühlen und selbstverständlich auch beim Betrieb der Heiz- bzw. Kühleinrichtungen führt dies aber zum einen zu einem stark zeitverzögerten Energieeintrag in den Innenraum und zum anderen auch zu Energieverlusten, da immer auch die Isolierung mit geheizt bzw. gekühlt werden muss. Alleine das Öffnen der Türe des Innenraums führt dann zu einer starken Temperaturveränderung im Innenraum und das Ausregeln dieser Temperaturveränderung erfordert einen vergleichsweise großen Zeitraum, da Wärme von der Heizeinrichtung über die schlecht wärmeleitfähige Wandung des Innenraums eingebracht bzw. Wärme über die schlecht wärmeleitfähige Wandung des Innenraums abgezogen werden muss. Das Vorsehen eines gut wärmeleitfähigen Energiespeicherelements ermöglicht es hingegen, Temperaturschwankungen im Innenraum schnell auszugleichen, und es besteht auch die Möglichkeit, mit passiven Kühlelementen, wie Eisschalen oder Wärmepellets, eine schnelle und gleichmäßige Erwärmung des Innenraums zu erreichen. Selbst dann, wenn eine aktive Heiz- oder Kühleinrichtung auf der dem Innenraum abgewandten Seite des Energiespeicherelements angeordnet wird, ist eine energieeffiziente Temperierung des Innenraums möglich. Auf der, dem Innenraum abgewandten Seite des Energiespeicherelements kann selbstverständlich auch eine Wärmeisolierung vorgesehen sein, so dass beispielsweise beim Einschieben von warmen Speisen zunächst der Innenraum und auch das Energiespeicherelement erwärmt werden müssen. Wenn das Energiespeicherelement aber einmal erwärmt ist, wird eine weitere Energieabfuhr nach außen durch die Wärmeisolierung verhindert und die im Energiespeicherelement gespeicherte Wärme trägt dazu bei, Temperaturschwankungen durch Öffnen der Türe des Innenraums rasch auszugleichen. Analog kann bei gekühltem Innenraum ein Temperaturanstieg rasch ausgeglichen werden.

Der erfindungsgemäße Temperierungsschrank ist daher in besonderer Weise für die zeitliche, räumliche und thermische Pufferung von Speisen geeignet.

Die Heizeinrichtung kann wenigstens abschnittsweise den Boden bilden, der den Innenraum nach unten begrenzt.

Auf diese Weise treten keine Energieverluste dadurch auf, dass zunächst eine Zwischenwandung zwischen Heizeinrichtung und Innenraum beheizt werden muss. Selbstverständlich ist beispielsweise zwischen Widerstandsheizschlangen und dem Innenraum eine gut zu reinigende Trennwand erforderlich. Im Sinne der Erfindung wird eine solche Trennwand aber so ausgebildet und angeordnet, dass ein Wärmeeintrag mit geringen Verlusten in den Innenraum möglich ist.

Die Heizeinrichtung kann als Glaskochfeld ausgebildet sein.

Ein Glaskochfeld ermöglicht die leichte Reinigung des Bodens des Innenraums und darüber hinaus das Garen von Speisen im Innenraum, da beispielsweise ein Speisenbehälter unmittelbar auf das Glaskochfeld aufgestellt werden kann.

Die Heizeinrichtung kann als induktives Kochfeld ausgebildet sein.

Bei induktiver Erwärmung wird bekanntermaßen lediglich der Speisenbehälter selbst, nicht aber das Kochfeld erwärmt. Dies ermöglicht einen äußerst energieeffizienten Wärmeeintrag in den Innenraum. Sollen im Innenraum Speisen nicht gegart, sondern lediglich warmgehalten werden und sind mehrere Behälter mit warm zu haltenden Speisen übereinander angeordnet, so kann ein induktiv erwärmbares EnergiespeicherElement auf das induktive Kochfeld aufgelegt werden. Dieses Energiespeicherelement ist dann unmittelbar im Innenraum angeordnet und sorgt für eine gleichmäßige Temperatur im Innenraum.

Die Heizeinrichtung kann ein zweites thermisches Energiespeicherelement aufweisen, das wenigstens abschnittsweise den Boden des Innenraums bildet.

Beispielsweise kann die Trennwand zwischen Heizeinrichtung und Innenraum als thermisches Energiespeicherelement ausgebildet sein, das gut wärmeleitfähigem Material besteht. Auf diese Weise ist ein über die Fläche des Bodens des Innenraums gleichmäßiger Wärmeeintrag möglich.

Eine den Innenraum begrenzende Wandung des ersten und/oder zweiten Energiespeicherelements kann aus einem Mehrschichtmaterial zwei Deckschichten aus Edelstahl und einem gut wärmeleitfähigen metallischen Kern bestehen.

Das Mehrschichtmaterial besteht vorzugsweise aus drei aufeinander befestigten Schichten, nämlich einer dicken Zwischenschicht aus gut wärmeleitendem Material wie Aluminium, Kupfer oder Stahl, die zwischen zwei wesentlich dünneren Deckschichten aus nicht rostendem Stahl angeordnet ist. Wenigstens eine dieser Deckschichten besteht vorzugsweise aus ferritischem Stahl, also aus einem Werkstoff, der gut magnetisierbar ist. Dadurch ist das Energiespeicherelement auch induktiv beheizbar. Die andere Deckschicht kann vorzugsweise aus austenitischem Stahl bestehen. Vorzugsweise bestehen beide Deckschichten aus ferritischem Stahl und die Zwischenschicht aus Aluminium. Der ferritische Stahl ist vorzugsweise ein 13% bis 17% Chromstahl. Das Mehrschichtmaterial hat in einer vorteilhaften Ausführungsform eine Gesamtdicke von bis zu 4 mm, wobei die Deckschichten eine Dicke von bis zu 0,6 mm aufweisen. Das Mehrschichtmaterial kann tiefgezogen werden, so dass die Energiespeicherelemente die Form von schalenartigen Gastronorm-Behältern einnehmen können. Energiespeicherelemente aus Mehrschichtmaterial sind zum einen gut wärmeleitfähig und darüber hinaus hygienisch zu handhaben.

Wenigstens ein Ventilator ist vorgesehen, um Luft im Innenraum umzuwälzen.

Zum Erreichen einer möglichst gleichmäßigen Temperaturverteilung im Innenraum kann beispielsweise in der dem Innenraum verschließenden Türe ein Ventilator vorgesehen sein, es können beispielsweise aber auch zwei übereinander angeordnete Ventilatoren vorgesehen sein, um Luft in einem oberen Abschnitt bzw. einem unteren Abschnitt des Innenraums umzuwälzen. Da die Heizeinrichtung im Bereich des Bodens des Innenraums angeordnet ist und auch eine eventuelle Kühleinrichtung im Bereich der Decke des Innenraums angeordnet ist, können die Ventilatoren gegenüber konventionellen Temperierungsschränken mit geringerer Umluftleistung ausgelegt werden, da durch diese Anordnung der Heizeinrichtung bzw. Kühleinrichtung bereits eine gleichmäßige Temperaturverteilung im Innenraum erreicht wird. Wenigstens der für den unteren Abschnitt vorgesehene Ventilator kann zusätzlich mit einer Heizeinrichtung versehen sein, um eine starke und gleichmäßige Temperierung des Innenraums, beispielsweise zum Backen, zu ermöglichen.

In Weiterbildung der Erfindung ist das erste, den Innenraum wenigstens abschnittsweise nach oben begrenzende Energiespeicherelement als Schale aus Mehrschichtmaterial mit zwei Deckschichten aus Stahl und einem gut wärmeleitfähigen metallischen Kern ausgebildet.

Indem die Decke des Innenraums durch eine Schale aus Mehrschichtmaterial gebildet ist, die entweder fest angeordnet oder in eine Öffnung einsetzbar sein kann, besteht die Möglichkeit, diese Schale von außen her mit Eis zu füllen, um den Innenraum kühl zu halten. Aufgrund der guten Wärmeleitfähgkeit des Mehrschichtmaterials kann in die Schale aber beispielsweise auch heißes Wasser oder Wärmepellets eingefüllt werden, um den Innenraum warm zu halten. Das Vorsehen einer Schale aus Mehrschichtmaterial im Bereich der Decke des Innenraums bietet aber auch gleichzeitig die Möglichkeit, die Oberseite des Temperierungsschrankes zur Speisenausgabe zu nützen. Sollen kalte Speisen ausgegeben werden, wird die Schale aus Mehrschichtmaterial mit Eis befüllt, so dass ein auf der Schale platziertes Speisentablett kühl gehalten wird. Sollen warme Speisen ausgegeben werden, wird die Schale aus Mehrschichtmaterial mit Wärmepellets oder heißem Wasser befüllt, um ein darauf angeordnetes Speisentablett warm zu halten. Auf die Schale aus Mehrschichtmaterial kann beispielsweise auch ein sogenanntes Rolltop aufgesetzt werden, also eine aufklappbare Abdeckung, um das schnelle Erwärmen oder Abkühlen von Speisen zu verhindern und dennoch eine Ausgabe zu ermöglichen.

In Weiterbildung der Erfindung sind Transportrollen zum Bewegen des Temperierungsschranks vorgesehen.

In Weiterbildung der Erfindung sind wenigstens ein Temperatursensor zum Erfassen einer Innenraumtemperatur und ein elektronischer Speicher zum Speichern eines zeitlichen Innentemperaturverlaufs vorgesehen. Vorzugsweise ist eine elektronische Schnittstelle zum Auslesen des im Speicher aufgezeichneten Innentemperaturverlaufs vorgesehen.

Auf diese Weise werden die Voraussetzungen für eine HACCP-Dokumentation geschaffen (Hazard Analysis Critical Control Points), so dass die gesetzlichen Bestimmungen bei der Speisenzubereitung und Verteilung problemlos eingehalten werden können. Vorzugsweise ist weiter ein Kerntemperaturfühler zum Bestimmen einer Kerntemperatur von Speisen im Innenraum vorgesehen. Ein solcher Kerntemperaturfühler kann zum einen zur Dokumentation der Speisentemperatur verwendet werden, zum anderen ist aber beispielsweise auch ein kontrolliertes Garen bis zu einer gewünschten Temperatur in der Speise problemlos möglich. Auch dadurch wird die Flexiblität des erfindungsgemäßen Temperierungsschrankes wesentlich erhöht.

Weitere Merkmale und Vorteile der Erfindung ergeben sich aus den Ansprüchen und der nachfolgenden Beschreibung im Zusammenhang mit den Zeichnungen. Einzelmerkmale der unterschiedlichen, in den Zeichnungen dargestellten Ausführungsformen können dabei in beliebiger Weise miteinander kombiniert werden, ohne den Rahmen der Erfindung zu überschreiten. In den Zeichnungen zeigen:
- Fig. 1: eine erste Ausführungsform eines erfindungsgemäßen Tempe- rierungsschranks in perspektivischer Ansicht,
- Fig. 2: eine schematische perspektivische Ansicht eines Temperie- rungsschranks gemäß einer zweiten Ausführungsform der Erfin- dung und
- Fig. 3: eine schematische perspektivische Ansicht eines Temperie- rungsschranks gemäß einer dritten Ausführungsform der Erfin- dung.

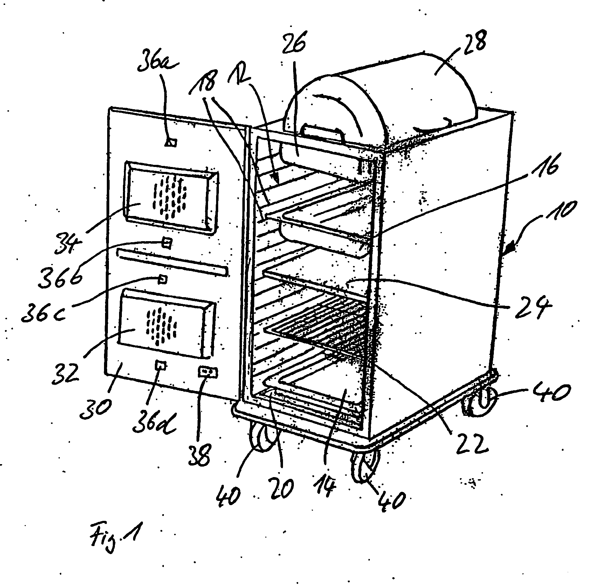

Die Darstellung der Fig. 1 zeigt einen erfindungsgemäßen Temperierungsschrank 10, der einen Innenraum 12 zum Aufnehmen von Speisen hat. In dem Innenraum 12 sind zwei übereinander angeordnete Speisenbehälter 14, 16 in Form von sogenannten Gastronorm-Behältern angeordnet. Die Gastronorm-Behälter 14, 16 sind jeweils schalenartig ausgebildet. Ersichtlich können mehr als zwei Gastronorm-Behälter innerhalb des Innenraums 12 übereinander angeordnet werden. Der Gastronorm-Behälter 16 liegt mit seinen Seitenkanten auf Führungsschienen 18 auf, die in Form von Ausprägungen in den einander gegenüberliegenden Seitenwänden des Innenraums 12 realisiert sind. Die einander gegenüberliegenden Seitenwände mit den Führungsschienen 18 bestehen jeweils aus einer durchgehenden, geprägten Blechplatte aus CNS-Stahl (Chrom-Nickelstahl).

Der Boden des Innenraums ist mittels einer Heizeinrichtung 20 gebildet, die in Form eines induktiven Kochfelds realisiert ist. Der Gastronorm-Behälter 14 steht unmittelbar auf dem induktiven Kochfeld 20 auf. Der Gastronorm-Behälter 14 besteht aus sogenanntem Mehrschicht-Material und weist im Querschnitt gesehen zwei Deckschichten und eine dazwischen angeordnete Zwischenschicht aus gut wärmeleitfähigem Material auf. Die Deckschichten bestehen jeweils aus etwa 0,6 mm starkem ferritischem rostfreiem Stahl, die Zwischenschicht aus etwa 4 mm starkem Aluminium. Der Gastronorm-Behälter 14 ist dadurch induktiv erwärmbar und kann zum Garen von Speisen verwendet werden. Oberhalb des Gastronorm-Behälters 14 sind in dem Innenraum 12 weiterhin ein Gitterrost 22 und ein Trennelement 24 auf jeweilige Führungsschienen 18 aufgeschoben. Das Trennelement 24 besteht aus schlecht wärmeleitfähigem Material, beispielsweise Kunststoff und trennt den Innenraum 12 in einen oberen und einen unteren Bereich.

Eine Decke des Innenraums 12 weist eine in der Darstellung der Fig. 1 nicht erkennbare Öffnung auf, in die ein weiterer Gastronorm-Behälter 26 aus Mehrschichtmaterial eingesetzt ist. Dieser Gastronorm-Behälter 26 wirkt aufgrund des Mehrschichtmaterials als thermisches Energiespeicherelement und bildet gleichzeitig eine sehr gut wärmeleitfähige Decke des Innenraums 12. Um den Abschnitt des Innenraums 12 oberhalb des Trennelements 24 kühl zu halten, wird der Gastronorm-Behälter 26 beispielsweise mit Crush-Eis befüllt. Der geringe Wärmewiderstand des Mehrschichtmaterials des Gastronorm-Behälters 26 sorgt dann für eine rasche Wärmeabfuhr aus dem oberen Abschnitt des Innenraums 12. Auf den Gastronorm-Behälter 26 in der Decke des Innenraums 12 ist beispielsweise ein nicht sichtbares Speisentablett aufgesetzt, das wiederum mit einem Rolltop-Deckel 28 abgedeckt ist. Der Deckel 28 kann abschnittsweise geöffnet werden und auf dem nicht sichtbaren Speisentablett angeordnete kühle Speisen können entnommen und verteilt werden.

Der Temperierungsschrank 10 ist mit einer Türe 30 versehen, die auf ihrer, im geschlossenen Zustand den Innenraum 12 begrenzenden Innenseite mit zwei übereinander angeordneten Ventilatoren 32, 34 versehen ist. Der untere Ventilator 32 kann die Luft im unteren Abschnitt des Innenraums 12, also unterhalb des Trennelements 24, umwälzen und der obere Ventilator 34 kann die Luft im oberen Abschnitt des Ini nenraums 12, also oberhalb des Trennelements 24, umwälzen. Auf diese Weise kann sowohl im oberen als auch im unteren Abschnitt des Innenraums 12 eine sehr gleichmäßige Temperaturverteilung erreicht werden. Der untere Ventilator 32 ist mit einer nicht dargestellten Heizeinrichtung versehen, um erforderlichenfalls selbst Warmluft zu erzeugen und umzuwälzen, beispielsweise dann, wenn im unteren Abschnitt des Innenraums 12 auf mehreren Ebenen gleichzeitig gebacken werden soll. Da die Heizeinrichtung 20 sowie das thermische Energiespeicherelement in Form des Gastronorm-Behälters 26 aber abschnittsweise den Boden bzw. die Decke des Innenraums 12 bilden, wird auch ohne die Ventilatoren 32, 34 eine vergleichsweise gleichmäßige Temperaturverteilung im Innenraum 12 erreicht. Mittels der Heizeinrichtung 20 wird der Gastronorm-Behälter 14 erwärmt und selbst wenn dieser mit Speisen gefüllt ist, steigt von ihm ausgehende Wärme nach oben und erwärmt den übrigen Teil des unteren Abschnitts des Innenraums 12. Die dem Innenraum 12 zugewandte Unterseite des Gastronorm-Behälters 26 kühlt Luft im Innenraum ab, worauf diese nach unten sinkt und bereits dadurch für eine gleichmäßige Temperaturverteilung im oberen Abschnitt des Innenraums 12 sorgt.

Es ist ohne Weiteres zu erkennen, dass auch der vollständige Innenraum 12 für die Aufbewahrung von warmen bzw. kalten Speisen genutzt werden kann. Hierzu muss lediglich das Trennelement 24 entfernt werden. Bei Aufbewahrung von kalten Speisen im kompletten Innenraum 12 bleibt selbstverständlich das induktive Kochfeld 20 abgeschaltet, bei Aufbewahrung von warmen Speisen im Innenraum wird selbstverständlich der Gastronorm-Behälter 26 nicht mit Eis befüllt. Anstatt dessen kann der Gastronorm-Behälter 26 dann mit heißem Wasser oder mit Wärmepellets befüllt werden. Alternativ kann der Gastronorm-Behälter 26 auch leer bleiben und an seiner Oberseite beispielsweise mittels des Deckels 28 abgedeckt bleiben. Die Luft zwischen Deckel 28 und Gastronorm-Behälter 26 sorgt dann für eine gute thermische Isolierung. Auch im leeren Zustand sorgt die im Mehrschichtmaterial des Gastronorm-Behälters 26 gespeicherte Wärmeenergie für einen raschen Temperaturausgleich, beispielsweise dann, wenn die Türe 30 kurzzeitig geöffnet wird.

In der Türe 30 sind insgesamt vier Temperatursensoren 36a, 36b, 36c und 36d vorgesehen. Die Anordnung der Temperatursensoren 36a, 36b, 36c und 36d ist lediglich beispielhaft, wesentlich ist, dass die Temperatursensoren 36a, 36b, 36c und 36d so angeordnet sind, dass eine verlässliche Aussage über eine Temperatur im Innenraum 12 gemacht werden kann, unabhängig davon, ob der Innenraum 12 leer ist, ob das Trennelement 24 eingeschoben ist oder ob zahlreiche Gastronorm-Behälter mit Speisen im Innenraum 12 angeordnet sind. Weitere oder alternative Temperatursensoren können beispielsweise in der Rückwand des Innenraums 12 oder in dessen Seitenwänden angeordnet sein. Die Temperatursensoren 36a, 36b, 36c und 36d sind mit einem nicht dargestellten elektronischen Speicher verbunden, mit dem ein Temperaturverlauf über der Zeit abgespeichert werden kann. Mittels der Temperatursensoren 36a, 36b, 36c und 36d kann damit eine räumliche Temperaturverteilung im Innenraum 12 und in Verbindung mit der elektronischen Speichereinheit ein zeitlicher Temperaturverlauf erfasst und abgespeichert werden. Vorzugsweise ist eine elektronische Schnittstelle zum Auslesen des gespeicherten Temperaturverlaufs vorgesehen. Auf diese Weise können die räumliche Temperaturverteilung und der zeitliche Temperaturverlauf im Innenraum 12 dokumentiert werden und die gesetzlichen Anforderungen in Bezug auf eine HACCP-Dokumentation können erfüllt werden.

In der Türe 30 ist weiter ein Steckplatz 38 zum Einstecken eines Kerntemperaturfühlers vorgesehen. Ein solcher Kerntemperaturfühler kann zur Dokumentation des Temperaturverlaufs innerhalb von Speisen oder auch zum punktgenauen Garen von Speisen im Innenraum 12 verwendet werden.

Der Temperierungsschrank 10 ist darüber hinaus mit vier Transportrollen 40 versehen, so dass dieser auch von einer Person leicht und sicher bewegt werden kann. Elektrische Anschlussleitungen und Schalter für die Heizeinrichtung 20, die Ventilatoren 32, 34 und die elektronische Speichereinheit sowie die elektronische Schnittstelle sind der Übersichtlichkeit halber in Fig. 1 nicht dargestellt.

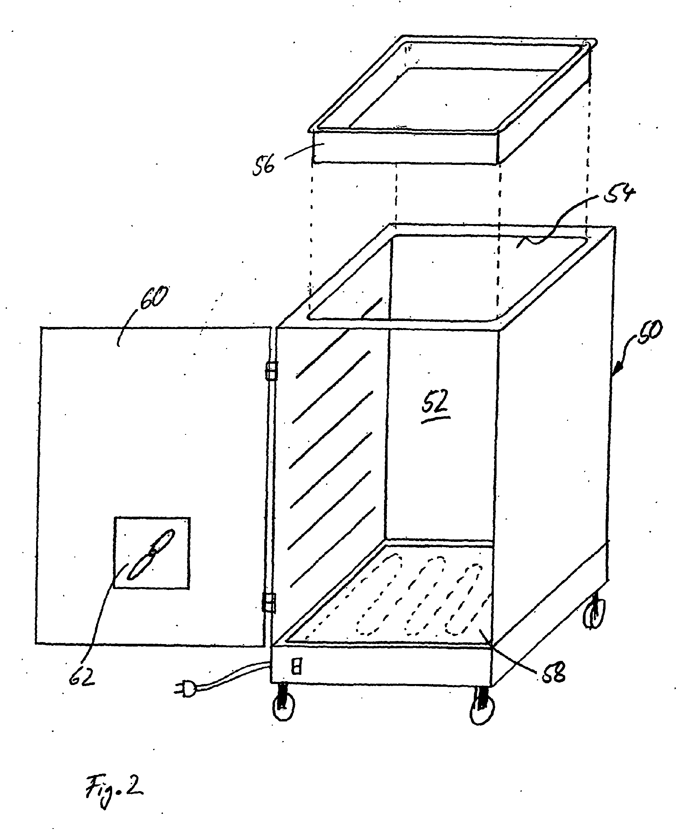

Die Darstellung der Fig. 2 zeigt einen Temperierungsschrank 50 gemäß einer zweiten Ausführungsform der Erfindung. Gut zu erkennen ist, dass der Innenraum 52 des Temperierungsschranks 50 im Bereich seiner Decke eine Öffnung 54 aufweist, in die ein Gastronorm-Behälter 56 eingesetzt werden kann. Der Gastronorm-Behälter 56 besteht aus Mehrschichtmaterial und wirkt dadurch als thermisches Energiespeicherelement. Alternativ zu dem Gastronorm-Behälter 56 kann in die Öffnung 54 eine Heizeinrichtung, beispielsweise ein Heizregister zum Gratinieren, oder eine elektrische Kühleinrichtung eingesetzt werden. Im Innenraum 52 des Temperierungsschranks 50 können dadurch Speisen entweder nur aufbewahrt und passiv gekühlt werden, indem der Gastronorm-Behälter 56 mit Eis befüllt wird. Alternativ können in dem Innenraum 52 Speisen gegart werden und beispielsweise auch mit Oberhitze gratiniert werden, wenn in die Öffnung 54 ein Heizregister eingesetzt ist. Nach Einsetzen einer Kühlvorrichtung in die Öffnung 54 kann der Innenraum 52 stark gekühlt werden und Speisen können über einen unbegrenzten Zeitraum kühl gehalten werden.

Ein Boden des Innenraums 52 ist bei dem Temperierungsschrank 50 mittels eines thermischen Energiespeicherelements 58 aus gut wärmeleitfähigem Material gebildet, auf dessen, dem Innenraum 52 abgewandten Unterseite eine lediglich gestrichelt angedeutete Heizschlange angeordnet ist. Das Energiespeicherelement 58 besteht aus einem Mehrschichtmaterial aus zwei Deckschichten aus Stahl und einem gut wärmeleitfähigem Kern aus Aluminium. Die von der gestrichelt angedeuteten Heizschlange ausgehende Wärme wird dadurch sehr gleichmäßig verteilt in den Innenraum 52 eingeleitet. Es ist dadurch möglich, den Innenraum 52 gleichmäßig zu beheizen. Aufgrund der guten Wärmeleitfähigkeit des thermischen Energiespeicherelements 58 werden Temperaturveränderungen durch Öffnen einer Türe 60 zum Innenraum rasch ausgeglichen, da ein rascher Wärmeeintrag in den Innenraum 52 erfolgen kann. Das Energiespeicherelement 58 sorgt aber auch dadurch für einen raschen Temperaturausgleich, dass die in ihm gespeicherte Wärme sofort in den Innenraum 52 eingeleitet werden kann. Auch ohne Einschalten der Heizschlange kann aufgrund der im Energiespeicherelement 58 gespeicherten Energie damit ein Temperaturausgleich im Innenraum 52 stattfinden. Dies ist dann von Bedeutung, wenn die Türe 60 zum Entnehmen oder Einbringen von Speisen geöffnet wird. Dies ist aber auch dann von großer Relevanz, wenn das Energiespeicherelement 58 zum Garen von Speisen benutzt wird. Nach dem Aufsetzen eines kalten Behälters mit zu garenden Speisen auf das Energiespeicherelement 58 wird der Behälter und die darin befindlichen Speisen sehr rasch erwärmt, da zum einen sofort nach dem Aufsetzen die im Energiespeicherelement 58 gespeicherte Wärme zum Behälter geleitet wird und nach Einschalten der Heizschlange Wärme durch das gut wärmeleitfähige Energiespeicherelement 58 rasch in den Behälter mit den Speisen eingeleitet wird.

Anstelle des Energiespeicherelements 58 und der darunter angeordneten Heizeinrichtung kann auch ein einfacher, auf der dem Innenraum 52 abgewandten Seite thermisch isolierter Boden aus Chrom-Nickel-Stahl (CNS) oder dergleichen vorgesehen sein. In diesem Fall ist dann der Ventilator 62 mit einer Heizeinrichtung versehen, um den Innenraum 52 gleichmäßig erwärmen zu können.

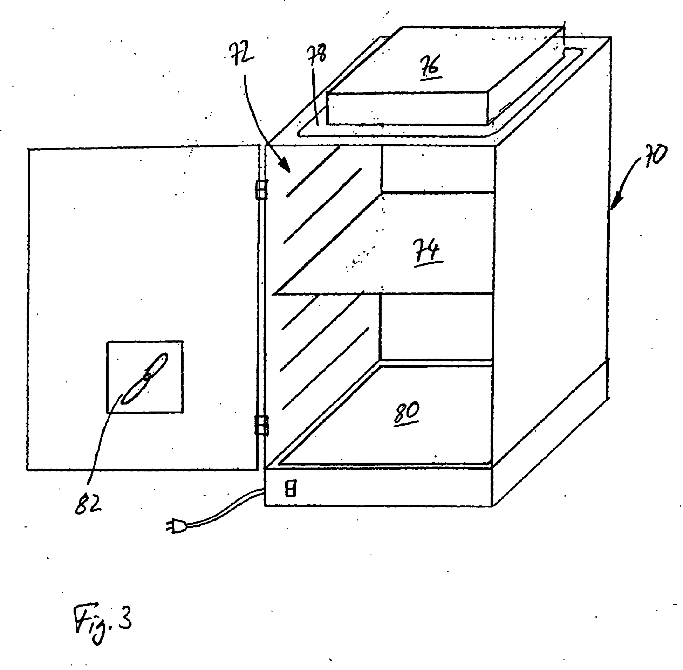

Die Darstellung der Fig. 3 zeigt einen Temperierungsschrank 70 gemäß einer dritten Ausführungsform der Erfindung. Ein Innenraum 72 des Temperierungsschranks 70 ist mittels eines Trennelements 74 in einen oberen und einen unteren Bereich aufgeteilt. Eine Decke des Innenraums wird wenigstens abschnittsweise durch eine Kühleinrichtung 76 gebildet. Die Kühleinrichtung 76 ist elektrisch betrieben, wobei der Übersichtlichkeit halber elektrische Zuleitungen und Schalter nicht dargestellt sind. Die Kühleinrichtung 76 weist eine Platte aus Mehrschichtmaterial 78 auf, die abschnittsweise die Decke des Innenraums 72 bildet. Die Platte 78 wirkt als Energiespeicher und sorgt aufgrund ihres geringen Wärmewiderstands gleichzeitig dafür, dass Wärme aus dem Innenraum 72 rasch abgeführt werden kann.

Ein Boden des Innenraums 72 ist abschnittsweise durch ein induktives Kochfeld 80 gebildet. Soll der untere Abschnitt des Innenraums 72 er wärmt werden, so kann auf dem induktiven Kochfeld 80 eine Platte oder ein Gastronorm-Behälter aus induktiv erwärmbarem Mehrschichtmaterial angeordnet werden, der dann zum einen Wärme unmittelbar in den Innenraum 72 einleitet und zum anderen als thermisches Energiespeicherelement für einen raschen Ausgleich von Temperaturschwankungen im Innenraum 72 sorgt und darüber hinaus auch während des Transports des Temperierungsschranks 70 eine Temperatur im Innenraum 72 weitgehend konstant hält. Aufgrund des Trennelements 74 kann der Innenraum 72 dabei in einen unteren, warmen Teil und einen oberen, kalten Teil getrennt werden.

## Patentansprüche

1. Temperierungsschrank für Speisen mit einem verschließbaren Innenraum zum Aufnehmen mehrerer, übereinander angeordneter Speisenbehälter, wobei zwei übereinander angeordnete Ventilatoren (32, 34; 62; 82) vorgesehen sind, um Luft in einem oberen Abschnitt beziehungsweise einem unteren Abschnitt des Innenraums (12; 52; 72) umzuwälzen und wobei wenigstens der für den unteren Abschnitt vorgesehene Ventilator mit einer Heizeinrichtung zum Beheizen des Innenraums versehen ist, **gekennzeichnet durch** wenigstens eine Öffnung (54) im Bereich einer den Innenraum nach oben begrenzenden Decke und einem ersten thermischen Energiespeicherelement (26; 56), einer Heizeinrichtung oder einer Kühleinrichtung (76) zum Einsetzen in die Öffnung (54), wobei ein horizontal in den Innenraum (12; 52; 72) einschiebbares Trennelement (24; 74) aus schlecht wärmeleitfähigem Material vorgesehen ist, um den Innenraum (12; 52; 72) in einen oberen und unteren Bereich aufzuteilen.

2. Temperierungsschrank nach Anspruch 1, **dadurch gekennzeichnet, dass** das erste, den Innenraum (12; 52) wenigstens abschnittsweise nach oben begrenzende Energiespeicherelement (26; 56) als Schale aus Mehrschichtmaterial mit zwei Deckschichten aus Stahl und einem gut wärmeleitfähigen, metallischen Kern ausgebildet ist.

3. Temperierungsschrank nach wenigstens einem der vorstehenden Ansprüche, **dadurch gekennzeichnet, dass** wenigstens ein Temperatursensor (36a, 36b, 36c, 36d) zum Erfassen einer Innenraumtemperatur und ein elektronischer Speicher zum Speichern eines zeitlichen Innenraumtemperaturverlaufs vorgesehen sind.

4. Temperierungsschrank nach Anspruch 3, **dadurch gekennzeichnet, dass** eine elektronische Schnittstelle zum Auslesen des im Speicher aufgezeichneten Innentemperaturverlaufs vorgesehen ist.

5. Temperierungsschrank nach wenigstens einem der vorstehenden Ansprüche, **dadurch gekennzeichnet, dass** ein Kemtemperaturfühler zum Bestimmen einer Kerntemperatur von Speisen im Innenraum (12) vorgesehen ist.

## Claims

1. A tempering box for food, having a sealable inner space for accommodating a plurality of food containers arranged one above the other, wherein two fans (32, 34; 62; 82) arranged one above the other are provided in order to circulate air in an upper section or in a lower section of the inner space (12; 52; 72) and wherein at least the fan provided for the lower section is provided with a heating device for heating the inner space, **characterised by** at least one opening (54) in the region of a cover delimiting the inner space at the top, and with a first thermal energy storage element (26; 56), a heating device or a cooling device (76) for insertion into the opening (54), wherein a separating element (24; 74) which consists of poorly heat-conductive material and can be inserted horizontally into the inner space (12; 52; 72) is provided in order to divide the inner space (12; 52; 72) into an upper and lower region.

2. The tempering box according to claim 1, **characterised in that** the first energy storage element (26; 56), which delimits the inner space (12; 52) at least in sections at the top, is configured as a tray consisting of multilayered material, with two covering layers consisting of steel and one highly heat-conductive, metallic core.

3. The tempering box according to at least one of the preceding claims, **characterised in that** at least one temperature sensor (36a, 36b, 36c, 36d) for detecting an inner space temperature and an electronic memory for storing an inner space temperature profile over time are provided.

4. The tempering box according to claim 3, **characterised in that** an electronic interface is provided for reading out the inner temperature profile recorded in the memory.

5. The tempering box according to at least one of the preceding claims, **characterised in that** a core temperature probe is provided for determining a core temperature of food in the inner space (12).

## Revendications

1. Armoire de thermorégulation pour des aliments dotée d'un espace intérieur pouvant être fermé pour recevoir plusieurs récipients pour plats disposés les uns au-dessus des autres, deux ventilateurs (32, 34 ; 62 ; 82) disposés l'un au-dessus de l'autre étant prévus, afin de faire circuler de l'air dans une partie supérieure ou dans une partie inférieure de l'espace intérieur (12 ; 52 ; 72) et au moins le ventilateur prévu pour la partie inférieure étant doté d'un dispositif de chauffage pour le chauffage de l'espace intérieur, **caractérisé par** au moins une ouverture (54) dans la zone d'un plafond délimitant l'espace intérieur vers le haut et d'un premier élément accumulateur d'énergie thermique (26 ; 56), d'un dispositif de chauffage ou d'un dispositif de refroidissement (76) à insérer dans l'ouverture (54), un élément de séparation (24 ; 74) pouvant être introduit horizontalement dans l'espace intérieur (12 ; 52 ; 72), à base de matériau mauvais conducteur de chaleur, étant prévu pour séparer l'espace intérieur (12 ; 52 ; 72) en une zone supérieure et en une zone inférieure.

2. Armoire de thermorégulation selon la revendication 1, **caractérisée en ce que** le premier élément accumulateur d'énergie (26 ; 56) délimitant l'espace intérieur (12 ; 52) au moins par endroits vers le haut est conçu sous forme de coque à base de matériau multicouche avec deux couches de recouvrement en acier et un noyau métallique et bon conducteur de chaleur.

3. Armoire de thermorégulation selon au moins l'une quelconque des revendications précédentes, **caractérisée** à ce qu'au moins un capteur de température (36a, 36b, 36c, 36d) et un accumulateur électronique sont prévus respectivement pour la détection d'une température intérieure et la mémorisation d'une variation de température intérieure dans le temps.

4. Armoire de thermorégulation selon la revendication 3, **caractérisée en ce qu'**une interface électronique est prévue pour la lecture de la courbe de température intérieure enregistrée dans la mémoire.

5. Armoire de thermorégulation selon au moins l'une quelconque des revendications précédentes, **caractérisée en ce qu'**une sonde de température de noyau est prévue pour déterminer une température de noyau de plats dans l'espace intérieur (12).
